Europäisches Patentamt

European Patent Office

Office européen des brevets

(19)

(11) Numéro de publication: **0 041 731**
**B1**

(12) **FASCICULE DE BREVET EUROPEEN**

(45) Date de publication du fascicule du brevet: **15.02.84**

(51) Int. Cl.³: **F 16 H 47/08**

(21) Numéro de dépôt: **81104457.7**

(22) Date de dépôt: **10.06.81**

(54) Boîte de vitesses automatique à quatre vitesses à train rassembleur-inverseur.

(30) Priorité: **11.06.80 FR 8013007**

(43) Date de publication de la demande:
**16.12.81 Bulletin 81/50**

(45) Mention de la délivrance du brevet:
**15.02.84 Bulletin 84/7**

(84) Etats contractants désignés:
**DE GB IT NL SE**

(56) Documents cités:
**FR - A - 1 521 686**
**FR - A - 2 390 645**
**FR - A - 2 425 586**
**US - A - 3 411 382**
**US - A - 3 722 323**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Mercier, Jacques**
**5, rue Alasseur**
**F-75015 Paris (FR)**
Inventeur: **Rameau, Jean**
**3, rue de Pointe Robert**
**F-95110 Sannois (FR)**

(74) Mandataire: **Casalonga, Axel et al,**
**BUREAU D.A. CASALONGA OFFICE JOSSE &**
**PETIT Baaderstrasse 12-14**
**D-8000 München 5 (DE)**

Courier Press, Leamington Spa, England.

Boîte de vitesses automatique à quatre vitesses à train rassembleur-inverseur

La présente invention concerne les changements de vitesses épicycloïdaux.

On connaît déjà, notamment d'après le brevet US—A—3 411 382, un changement de vitesses à train épicycloïdal associé à un convertisseur de couple entraîné par un moteur, de type comportant un dispositif rassembleur-inverseur constitué d'une part par deux planétaires d'entrée couplés respectivement à un premier arbre provenant du convertisseur et à l'organe de sortie d'un mécanisme épicycloïdal dont l'arbre d'entrée est entraîné directement par le moteur et dont l'organe de sortie est la couronne à denture intérieure d'un dernier étage épicycloïdal, et d'autre part par un châssis porte-satellite de sortie portant deux groupes de satellites qui engrènent chacun avec un des planétaires et qui de plus engrènent entre eux, un des groupes étant formé à cet effet de satellites longs, ce dispositif rassembleur-inverseur se complétant par une couronne à denture intérieure, en prise avec lesdits satellites longs et immobilisable en rotation par un frein ou un verrouillage pour obtenir la marche arrière.

Un tel changement de vitesses permet, d'accroître le nombre des rapports et la gamme des vitesses par rapport au mécanisme épicycloïdal de base sans le rassembleur-inverseur, et également d'améliorer le rendement sur les rapports les plus fréquemment utilisés, grâce à la dérivation de puissance, tout en conservant les avantages du convertisseur de couple sur le premier rapport et sur la marche arrière.

Cependant ces avantages ne sont acquis qu'au détriment d'une augmentation sensible de l'encombrement axial du fait que les deux étages du train rassembleur-inverseur s'ajoutent à ceux du mécanisme de base.

Le but de l'invention est d'eliminer l'inconvénient précédent tout en conservant les avantages du dispositif connu.

L'invention est caractérisée par le fait que ledit planétaire d'entrée couplé audit organe de sortie est disposé concentriquement à la périphérie de celui-ci et dans le même plan, l'ensemble de ces deux organes se présentant sous la forme d'une couronne unique à double denture intérieure et extérieure.

D'autres particularités de l'invention apparaîtront dans la description qui va suivre d'un mode de réalisation pris comme exemple et représenté sur le dessin annexé, sur lequel:

la fig. 1 est une vue schématique en coupe longitudinale d'un mécanisme à quatre rapports de marche avant et une marche arrière;

la fig. 2 est une vue schématique en couple transversale du train rassembleur-inverseur.

Dans le mode de réalisation décrit ci-dessous, et donné à titre d'exemple non limitatif, la transmission comprend selon les fig.

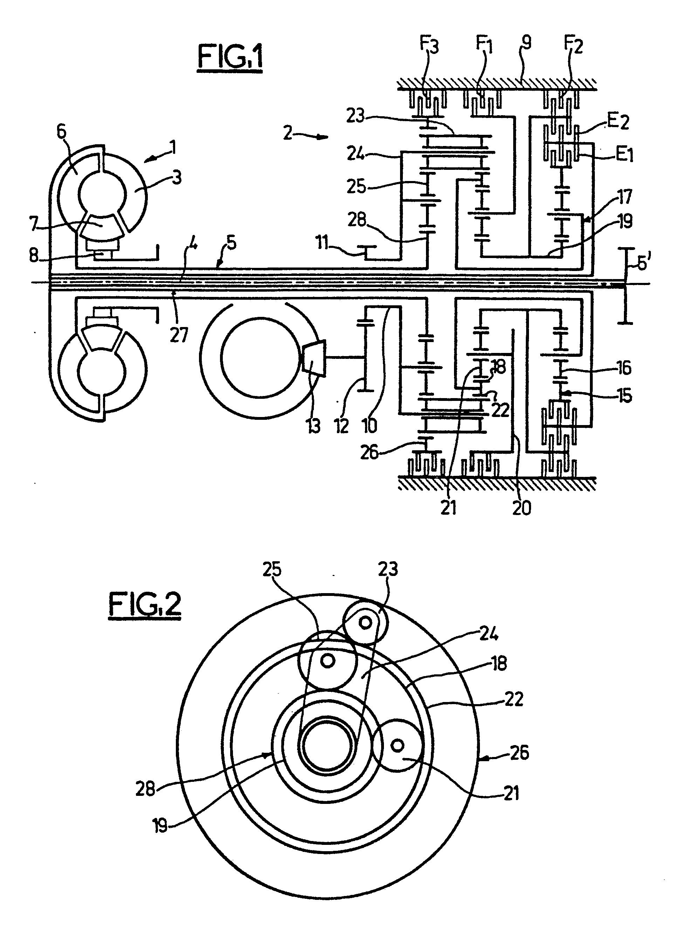

1 et 2, un convertisseur hydrocinétique de couple 1 et une boîte de vitesses à trains épicycloïdaux 2. Le convertisseur de couple comprend de manière classique trois éléments: l'impulseur ou pompe 3 relié au moteur d'entraînement du véhicule non représenté sur la fig. 1 et entraînant la pompe de servitude 5' de la boîte de vitesses par l'intermédiaire d'un arbre 4 qui traverse la boîte de vitesses 2; une turbine 6 dont l'arbre 5 constitue l'un des arbres d'entrée de la boîte de vitesses 2 et un réacteur 7 monté par l'intermédiaire d'un dispositif de roue libre 8.

Un deuxième arbre d'entrée 27 relie l'impulseur 3 à la boîte de vitesses.

Les trains épicycloïdaux 2 sont logés dans le carter 9 du mécanisme.

Un premier trains double reçoit directement une partie du couple moteur par l'arbre d'entrée 27 et le transmet au train rassembleur, lequel train rassembleur reçoit par ailleurs la partie du couple moteur transmise depuis la turbine 6 par l'arbre 5.

Le couple résultant des différentes caractéristiques des trains épicycloïdaux se transmet, par l'arbre de sortie 10 et deux pignons de descente 11 et 12, au couple conique 13 qui transmet le couple aux roues du véhicule par l'intermédiaire d'un différentiel classique.

Les différents rapports de transmission sont obtenus au moyen d'un premier embrayage E1, un deuxième embrayage E2, un premier frein F1, un deuxième frein F2 et un troisième frein F3.

Les deux embrayages et les trois freins peuvent être commandés hydrauliquement de manière classique. Dans la pratique on peut utiliser des embrayages multidisques soumis à l'action d'un piston recevant la pression d'huile d'un fluide hydraulique.

Le premier embrayage E1 est utilisé pour les rapports de marche avant en seconde, troisième et quatrième. Il transmet le couple provenant directement de l'impulseur 3 à la couronne dentée 15 qui se trouve en prise avec un premier jeu de pignon satellites 16 montés sur un premier châssis porte-satellites 17.

Le premier châssis porte-satellites 17 est lié en rotation à une deuxième couronne à double denture intérieure 18 et extérieure 22.

Le deuxième embrayage E2 transmet le couple à un planétaire double 19, lequel planétaire double 19 peut être immobilisé par un frein F2 par rapport au carter 9.

Le premier frein F1 est susceptible de bloquer le deuxième châssis porte-satellites 20 supportant un deuxième jeu de pignons satellites 21 en prise avec la denture intérieure 18 de la deuxième couronne et avec le planétaire 19.

Le train rassembleur-inverseur, ajouté au mécanisme à train épicycloïdal double connu décrit ci-dessus, comporte un planétaire 28 qui reçoit le couple transmis par la turbine 6 par l'intermédiaire de l'arbre 5 et un châssis porte-satellites 24 qui transmet le couple total de l'ensemble du mécanisme par l'arbre 10 vers les pignons de descente 11 et 12.

Le châssis porte-satellites 24 supporte deux jeux de pignons satellites: un premier jeu de pignons satellites 25 qui engrènent d'une part avec le planétaire 28, d'autre part avec les pignons satellites longs 23 du deuxième jeu; lesdits pignons satellites longs 23 engrènent par ailleurs avec la denture extérieure 22 de la couronne commune avec le train double décrit ci-dessus, et également avec la couronne 26. Ladite couronne 26 peut être immobilisée par l'action d'un frein F3 ou d'un verrouillage.

Le fonctionnement d'un mécanisme à train épicycloïdal double associé à un train rassembleur-inverseur selon l'invention est le suivant:

Pour obtenir le premier rapport de vitesse, les freins F1 et F2 sont serrés, ce qui permet d'immobiliser le planétaire double 19 et le

$$\text{Vitesse sortie}=\frac{1}{1+Ra} \cdot \text{vitesse turbine}+\frac{Ra}{1+Ra} \cdot \text{vitesse mécanisme.}$$

La vitesse mécanisme dépend des éléments qui sont immobilisés par les freins F1 et F2, l'entrée du couple se faisant pour ces deux rapports de marche avant par l'embrayage E1.

Le deuxième rapport est obtenu par serrage du frein F1, ce qui correspond à l'immobilisation du deuxième châssis porte-satellites 20.

Le troisième rapport est obtenu par serrage du frein F2, ce qui correspond à l'immobilisation du planétaire double 19.

Pour obtenir le quatrième rapport de vitesse, le train rassembleur intervient comme pour les deuxième et troisième rapports, mais dans ce cas, la vitesse d'entrée de la couronne 18—22 est égale à la vitesse de l'impulseur. Ceci est obtenu par l'utilisation simultanée des deux embrayages E1 et E2 ce qui entraîne la rotation en bloc du train double du mécanisme.

Ce quatrième rapport donne une vitesse relative inférieure ou au plus égale à la vitesse moteur suivant le glissement dans le convertisseur.

Pour obtenir la marche arrière, seul le frein F3 est serré, ce qui immobilise la couronne 26. Le couple moteur passe intégralement par la turbine et la vitesse obtenue ne dépend que de la raison Rr du train formé par la couronne 26 et le planétaire 28. Cette vitesse, a pour valeur relative

châssis porte-satellites 20, donc la couronne 18—22.

Le couple moteur passe intégralement par la turbine et la vitesse obtenue ne dépend que de la raison Ra du train formé par la couronne 22 et le planétaire 28. Cette vitesse a pour valeur relative

$$\frac{1}{1+Ra}$$

de la vitesse de turbine.

Pour obtenir les deuxième et troisième rapports de vitesse, le train rassembleur ajoute le couple transmis depuis la turbine par le planétaire 28 au couple transmis à travers le train double directement depuis l'impulseur par la couronne 18—22.

La vitesse obtenue à l'arbre de sortie 10, c'est-à-dire la vitesse du châssis porte-satellites 24, est liée aux vitesses relatives du planétaire 28 (turbine) et de la couronne 18—22 par la relation:

$$-\frac{1}{1+Rr}$$

de la vitesse turbine.

Pour illustrer les possibilités et les avantages de l'adjonction d'un train épicycloïdal rassembleur-inverseur, selon l'invention, à un mécanisme à train planétaire double donnant trois vitesses en marche avant, on donne ci-dessous un exemple de réalisation:

Soit un mécanisme à trois vitesses de gamme 2,5 dont les rapports de vitesses sont 0,4 pour la première 0,667 pour la deuxième, et 1,000 pour la troisième.

L'adjonction d'un train rassembleur-inverseur de raison Ra=2,4 fait passer la gamme à 1+Ra soit 3,4 soit un accroissement de 41,6% de la gamme sans tenir compte du glissement du convertisseur.

Le premier rapport obtenu a pour valeur

$$\frac{1}{1+Ra}=0,294$$

vitesse turbine.

Les second et troisième rapports ont une valeur donnée par la relation donnée ci-dessus:

$$\text{Vitesse sortie}=\frac{1}{1+Ra}\text{vitesse turbine}+\frac{Ra}{1+Ra}\text{vitesse mécanisme}$$

$$=0,294 \text{ vitesse turbine}+0,706 \text{ vitesse mécanisme}$$

ce qui donne tous calculs faits des valeurs de 0,576 pour le second rapport et 0,765 pour le troisième rapport; quand au quatrième rapport sa valeur est encore 1,000.

Le rapport de marche arrière est, comme le rapport de première, indépendant des caractéristiques du mécanisme initial.

Pour des raisons d'encombrement, et comme il peut être vu sur la fig. 2, le nombre de dents de la couronne 26 est impérativement très supérieur au nombre de dents de la couronne 22, donc la raison Rr du train épicycloïdal de marche arrière ou inverseur est supérieure à celle Ra du train rassembleur.

Dans l'exemple de réalisation ci-dessus, le train épicycloïdal de marche arrière a pour raison Rr=3,4 ce qui donne un rapport de vitesse de

$$-\frac{1}{1+Rr}=0,227.$$

La transmission du couple moteur se fait uniquement par le convertisseur pour les rapports de première et de marche arrière, ce qui permet d'utiliser intégralement les caractéristiques de multiplication de couple dudit convertisseur.

Par contre, pour les rapports de seconde, troisième et quatrième, le couple de sortie est la somme du couple Ct fourni par la turbine, et du couple Cm fourni par le mécanisme à train planétaire double, les deux couples étant liés par la relation

$$\frac{Ct}{Cm}=\frac{1}{Ra}$$

Le couple fourni par la turbine croît proportionnellement au glissement pour des glissements faibles, mais le rapport des couples passant respectivement par le convertisseur et directement par le mécanisme reste constant pour les trois rapports utilisant le mécanisme.

Suivant l'exemple donné ci-dessus, si le train rassembleur a une raison Ra=2,4; 1/Ra=0,416 le couple passant par le convertisseur n'est que de

$$\frac{1}{1+Ra}=\frac{1}{3,4}=0,294$$

du couple de sortie.

Si l'on admet que le rendement du convertisseur peut passer de 0,8 à 0,9 lorsque le couple transmis est divisé par 3,4, la comparaison des pertes permet de constater les avantages de l'adjonction d'un train rassembleur-inverseur selon l'invention. En effet, les pertes qui étaient de 0,2 sont réduites à 0,1×0,294=0,0294; le rendement passe ainsi de 0,8 à 1—0,0294=0,9706 soit une amélioration de 21% environ en ce qui concerne l'utilisation du convertisseur de couple à puissance transmise équivalente.

En ce qui concerne la possibilité évoquée ci-dessus d'accroître la puissance transmise par un dimensionnement correct du train rassembleur tout en conservant les caractéristiques du mécanisme à train planétaire double, elle résulte des rapports des coupes Ct et Cm indiqués ci-dessus.

A titre d'exemple, si le couple Cm maxi est de 1 mN (capacité du mécanisme initial) le couple maxi à la sortie du train rassembleur-inverseur suivant l'exemple ci-dessous pourra être de:

$$Cm(1+1/Ra)=1,416 \text{ mN.}$$

Une autre caractéristique particulièrement intéressante du train rassembleur-inverseur selon l'invention, est sa compacité:

Des mécanismes comportant des trains épicycloïdaux utilisés en division de puissance ont été proposés sur différents types de transmission associant un convertisseur de couple avec un mécanisme à plusieurs rapports de transmission.

Dans ces réalisations le train à division de puissance est juxtaposé à un ou plusieurs trains épicycloïdaux.

Dans la disposition selon l'invention l'élément de liaison en rotation du mécanisme initial à trois rapports et du train rassembleur-inverseur est un seul et unique élément comportant, comme il peut être vu sur les fig. 1 et 2, une denture intérieure 18 et une denture extérieure 22, ce qui permet de réduire l'encombrement axial.

Cet unique élément 18—22 joue le rôle de couronne pour le train planétaire initial et de planétaire pour le train rassembleur-inverseur.

Le tableau ci-dessous résume le fonctionnement du dispositif décrit et donné à titre d'exemple. Sur ce tableau, la colonne de gauche indique les rapports de vitesse avec, en correspondance sur chaque ligne horizontale, une croix indiquant le ou les éléments activés pour obtenir ce rapport.

|    | E1 | E2 | F1 | F2 | F3 |
|----|----|----|----|----|----|
| 1  |    |    | X  | X  |    |
| 2  | X  |    | X  |    |    |
| 3  | X  |    |    | X  |    |
| 4  | X  | X  |    |    |    |
| AR |    |    |    |    | X  |

L'exemple de réalisation et ses caractéristiques sont donnés à titre indicatif. Il est évident qu'un tel train rassembleur-inverseur peut être associé à d'autres types de mécanismes à plusieurs rapports de vitesses.

**Revendication**

Changement de vitesses à train épicycloïdal associé à un convertisseur de couple (1) entraîné par un moteur, du type comportant un dispositif rassembleur-inverseur constitué d'une par de deux planétaires d'entrée (28, 22) couplés respectivement à un premier arbre (5) provenant du convertisseur (1) et à l'organe de sortie (18) d'un mécanisme épicycloïdal dont l'arbre d'entrée (27) est entraîné directement par le moteur et dont l'organe de sortie (18) est la couronne à denture intérieure d'un dernier étage épicycloïdal, et d'autre part par un châssis porte-satellite (24) de sortie portant deux groupes de satellites (25, 23) qui engrènent chacun avec un des planétaires (28, 22) et qui de plus engrènent entre eux, un des groupes (23) étant formé à cet effet de satellites longs, ce dispositif rassembleur-inverseur se complétant par une couronne (26) à denture intérieure, en prise avec lesdits satellites longs (23) et immobilisable en rotation par un frein (F3) ou un verrouillage pour obtenir la marche arrière, caractérisé par le fait que ledit planétaire d'entrée (22) couplé audit organe de sortie (18) est disposé concentriquement à la périphérie de celui-ci et dans le même plan, l'ensemble de ces deux organes se présentant sous la forme d'une couronne unique (18—22) à double denture intérieure et extérieure.

**Patentanspruch**

Gangschaltung mit Planetengetriebe zusammen mit einem Drehmomentwandler (1), angetrieben von einem Motor, vom Typ, der eine Aufnahme-Umkehrvorrichtung enthält, die einerseits aus zwei Eingangs-Planetenrädern (28, 22) besteht, die mit einer ersten Welle (5) aus dem Drehmomentwandler (1) und an das Ausgangselement (18) eines Epizykloidmechanismus, dessen Eingangswelle (27) unmittelbar vom Motor angetrieben wird und dessen Ausgangselement (18) der Innenzahnkranz einer letzten Epizykloidstufe ist, gekoppelt sind, und andererseits durch einen Ausgangssatellitenträgerrahmen (24), der zwei Satellitengruppen (25, 23) trägt, die jede mit einem der Planetenräder (28, 22) im Eingriff stehen und die ferner untereinander in Eingriff stehen wobei eine dieser Gruppen (23) zu diesem Zweck aus langen Satellitenrädern gebildet wird, wobei diese Aufnahme-Umkehrvorrichtung durch einen Innenzahnkranz (26) ergänzt wird, der mit diesen langen Satellitenrädern (23) im Eingriff und mittels einer Bremse (F3) bzw. einer Verriegelung drehfest feststellbar ist um den Rückwärtsgang zu erhalten, dadurch gekennzeichnet, daß das genannte Eingangsplanetenrad (22), das mit dem genannten Ausgangselement (18) gekoppelt ist, konzentrisch an dessen Umfang und in der gleichen Ebene angeordnet ist, wobei sich die Baugruppe aus diesen beiden Elementen in der Form eines einzigen Zahnkranzes (18—22) mit doppelter, innerer und äußerer, Zähnung darstellt.

**Claim**

An epicyclic gear train speed change system combined with a torque converter (1) driven by an engine, of the type comprising a combining and reversing device consisting on the one hand of two input sun wheels (28, 22) coupled respectively with a first shaft (5) coming from the converter (1) and with the output member (18) of an epicyclic gear the input shaft (27) of which is driven directly by the engine and the output member (18) of which is the internally toothed ring gear of a last epicyclic stage, and on the other hand of an output planet carrier (24) carrying two sets of planet wheels (25, 23) which each mesh with one of the sun wheels (28, 22) and which also mesh with each other, one of the sets (23) consisting for this purpose of long planet wheels, this combining and reversing device being completed by an internally toothed ring gear (26) engaging with the said long satellites (23) and capable of being locked in rotation by a brake (F3) or a locking system to provide the reverse drive, characterized in that the said input sun wheel (22) coupled to the said output member (18) is located concentric with the latter's periphery and in the same plane, with both these two members being made in the form of a single ring gear (18—22) with a double set of internal and external gear teeth.

0 041 731

FIG.1

FIG.2